# EUROPEAN PATENT SPECIFICATION

(11) **EP 0 499 247 B1**
(45) Date of publication and mention of the grant of the patent: **27.08.1997**
(21) Application number: 92102404.8
(22) Date of filing: 13.02.1992
(51) Int. Cl.: G08B 3/10

(54) **Radio pager with power-backup memory for storing uncompleted messages**
Personenruf-Funkempfänger mit gesicherter Speicherung ungelesener Nachrichten im Fall des Abschaltens der Batterie
Récepteur radio d'appel de personnes avec sauvegarde de messages non lus lors d'une coupure de batterie

(30) Priority: 14.02.1991 JP 40757/91; 28.02.1991 JP 57773/91
(43) Date of publication of application: 19.08.1992
(73) Proprietor: NEC CORPORATION, Tokyo (JP)
(72) Inventor: Kawashima, Shinichi, Minato-ku, Tokyo (JP); Shibayama, Hiroaki, Minato-ku, Tokyo (JP)
(74) Representative: VOSSIUS & PARTNER

(56) References cited:
- EP-A- 0 226 436
- EP-A- 0 297 366
- EP-A- 0 393 793
- WO-A-90/10359
- GB-A- 2 114 343
- US-A- 4 755 816
- US-A- 4 851 829

## Description

The present invention relates to radio pagers having a memory for storing messages.

With conventional radio pagers, received messages are stored temporarily into a memory for later retrieval. If a message is not answered by a called user, it is stored in the memory and a short beep sound is periodically generated to remind the user of the uncompleted page. However, if the user inadvertently turns off the pager for power savings purposes, uncompleted pages which might be stored in the memory will be completely lost.

EP-A-226 436 discloses a radio paging receiver with a message protection capability and using a power-backup memory. Said known receiver displays an unconfirmed message but without alerting the user upon reactivation of the pager.

It is therefore an object of the present invention to provide a radio pager for storing uncompleted messages during turn-off periods and alerting the user when the pager is turned on again. This object is solved with the features of the claims. The radio pager as described comprises a receiver for detecting a paging signal addressed to the pager and a power-backup memory for storing messages. The receiver is the main power consuming unit of the pager and is often turned off for saving battery power. On receiving a paging signal, a message contained in it is stored into the memory and the user is alerted with a first sound pattern. A specified label is attached to the stored message if it is not answered by the user within a prescribed period of time. When the pager is turned off, the message is kept in the memory and when it is turned on again, the memory is searched. If a message attached with the specified label is detected in the memory, the user is alerted with a second sound pattern different from the first sound pattern. The different sound allows the user to quickly recognize that he is alerted by an uncompleted page.

In the claimed pager, each stored message is classified with a first label before alerting the user with a first sound pattern, and the label of the stored message is changed to a second label if the message is not answered within a prescribed period of time. When the pager is turned on again, the memory is searched. If a message attached with one of the first and second labels is detected, the user is alerted with a third or second sound pattern, respectively.

The present invention will be described in further detail with reference to the accompanying drawings, in which:
Fig. 1 is a block diagram of a radio display pager of the present invention;
Fig. 2 is a waveform diagram of sound patterns; and
Figs. 3A and 3B are flowcharts describing programmed instructions performed by the controller of Fig. 1.

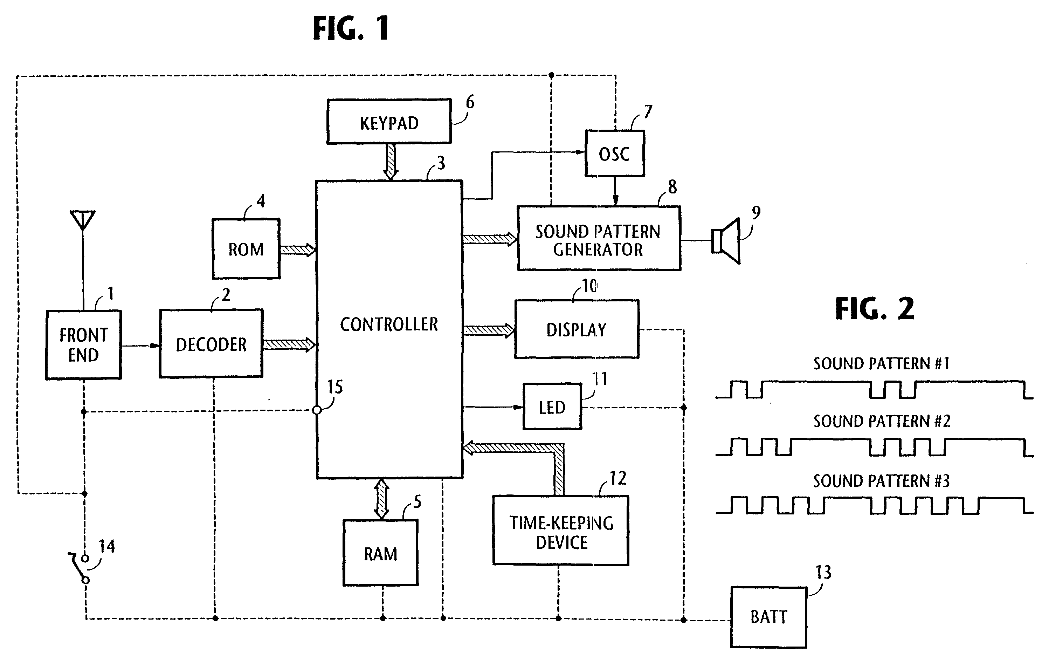

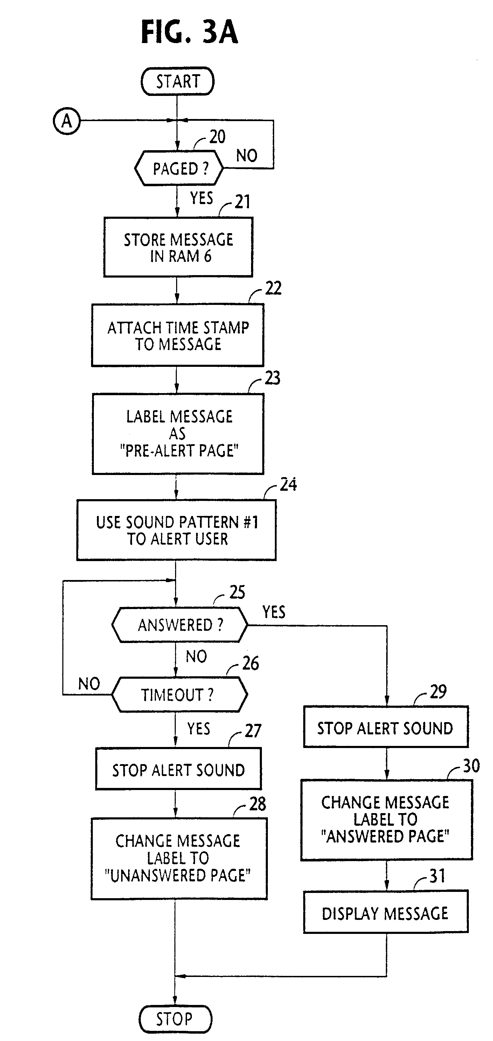

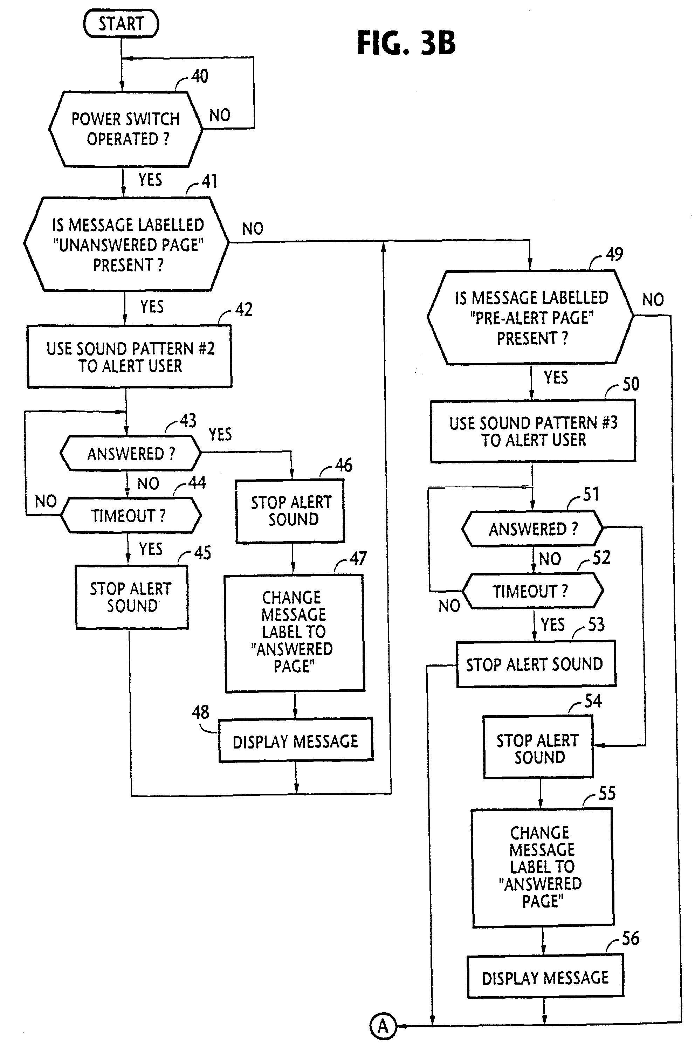

In a radio display pager shown in Fig. 1, paging signals recovered by front end 1 are decoded by decoder 2 into a form suitable for digital processing by a controller 3 which is programmed to perform instructions shown in Figs. 3A and 3B. A pager identifier assigned to the pager is stored in ROM 4 and received messages are stored in RAM 5. A keypad 6 is coupled to the controller 3 for answering incoming pages, reading the contents of RAM 5, or erasing unnecessary messages. An audio-frequency oscillator 7 is provided for generating an audio frequency tone signal. A sound pattern generator 8 stores a plurality of predetermined patterns, or cadences as shown in Fig. 2 and generates one of the stored cadences to modulate the tone signal and drives a speaker 9 with the modulated tone. A liquid crystal display 10 is coupled to controller 3 to provide a display of a message and a time stamp attached to it. A light-emitting diode 11 is activated when the user is alerted. A time-keeping device 12 supplies time-of-day data to controller 3. All components of the pager are powered from the battery 13. For power savings purposes, a power switch 14 is connected between battery 13 and power-drain units such as front end 1 and oscillator 7. In particular, RAM 5 is backed up by battery 13 to prevent its contents from being inadvertently lost when the pager is turned off. Controller 3 has a terminal 15 for sensing when power switch 14 is turned on.

In operation, if a paging signal is received, it is checked for coincidence between the identifier contained in it and an identifier stored in ROM 4 (step 20 in Fig. 3A). If they match, the message contained in the received signal is stored in RAM 5 (step 21) and time-of-day data is fetched from time-keeping device 12 and attached to the stored message as a time stamp (step 22). The incoming message is labelled as a "pre-alert page" (step 23). Sound pattern #1 (Fig. 2) is then selected by the controller from sound pattern generator 8 to modulate the tone signal from oscillator 7. The user is therefore alerted with sound pattern #1 if the received page is of most recent arrival. On hearing this sound pattern, the user operates the keypad 6 to answer the page (step 25). When this occurs, the alerting sound is stopped (step 29) and the label of the stored message is changed to a label "answered page" and the message and its time stamp are displayed on LCD 10 (steps 30, 31). If the user fails to notice the alert sound and a predetermined time-out period has lapsed (step 26), the sound is automatically stopped (step 27) and the message label is changed to "unanswered page" (step 28).

Therefore, if the user turns off the pager by operating power switch 14 for power savings purposes, possibility exists that uncompleted messages are lost completely.

When the pager is turned on again (step 40, Fig. 3B), controller 3 knows that terminal 15 is at a specified voltage level and proceeds to check the contents of RAM 5 for a message classified with a label "unanswered page" (step 41). If such a message is present in memory 5, the user is alerted with a sound pattern #2, indicating that there has been an unanswered page (step 42). If the user operates the keypad to answer the page (step 43), the sound is stopped (step 46) and the message label is changed to "answered page" and the message and its time stamp are displayed (steps 47, 48). The sound is also stopped when a time-out period expires following execution of step 43 (steps 44, 45).

If the answer is negative in step 41, control branches to step 49 to check to see if a message labelled "pre-alert page" is present. If the answer is negative, the program execution is terminated. Otherwise, it branches to step 50 to alert the user with a sound pattern #3 signifying that a pre-alert page is in memory 5. If the user answers the page (step 51), the alert is stopped (step 54) and the message label is changed to "answered page" and the message and its time stamp are displayed (steps 55, 56). No answering results in the sound being halted (steps 52, 53).

If the user successively hears sound patterns #2 and #3, he recognizes that an unanswered message and a pre-alert message have already been received and stored in memory 5.

Following the alerting of stored messages just described, control moves to step 20. If a new incoming page arrives almost at the same time the pager is turned on, control advances to step 20 following the prosecution of steps 40 to 56, and branches at step 20 to step 21 to proceed with the alerting of the user with sound pattern #1. Thus, the stored messages are retrieved first for alerting the user when the pager is turned on by having an incoming page wait in a queue.

## Claims

1. A radio pager comprising:
a receiver (1) for detecting a paging signal addressed to the pager;
a battery (13);
a manually operated power switch (14) to be operated by a user for activating said pager with said battery (13) when the pager is in use and deactivating said pager when the pager is not in use;
a memory (5) constantly being powered by the battery (13) even if the pager is deactivated;
a controller (3) for storing into said memory (5) a message transmitted by said paging signal, classifying the stored message with a first label indicating that the stored message is a pre-alert message, and changing the label of the stored message to a second label indicating that the stored message is an unanswered message if the stored message is not answered within a prescribed period of time, and changing the label of the stored message to a third label indicating that the stored message is an answered message if the stored message is answered within said prescribed period of time, said controller (3) being responsive to said power switch (14) being operated again by the user to re-activate said pager for immediately searching through said memory (5) to detect messages therein;
means (8) for generating first, second and third sound patterns;
means (9) for alerting a user with the first sound pattern if the controller (3) detects a message having said first label, and alerting the user with the second or third sound pattern if the controller (3) detects a message having said second or first label, respectively, when said messages are detected during the immediate search after reactivation of the pager; and
means (10) for displaying a message having said third label.

2. A method for operating a radio pager comprising a receiver (1) for detecting a paging signal addressed to the pager, a battery (13), a manually operated power switch (14) for activating said pager with said battery when the pager is in use and deactivating said pager when the pager is not in use, and a memory (5) constantly being powered by the battery even if the pager is deactivated, the method comprising the steps of:
a) storing into said memory (5) a message transmitted by said paging signal;
b) classifying the stored message with a first label indicating that the stored message is a pre-alert message;
c) alerting a user with a first sound pattern and determining whether the stored message is answered within a prescribed period of time;
d) if the stored message is determined by the step (c) to be not answered within said prescribed period of time, changing the label of the stored message to a second label indicating that the stored message is an unanswered message;
e) if the stored message is determined by the step (c) to be answered within said prescribed period of time, displaying the answered message and changing its label to a third label;
f) detecting when said pager is activated again and thereafter immediately searching through said memory to detect a message therein;
g) immediately alerting the user with a second or third sound pattern if the message detected by the step (f) is indicated by the second or first label, respectively, and determining whether the message detected by the step (f) is answered within a prescribed period of time;
h) if the message is determined by the step (g) to be not answered within said prescribed period of time, stopping said second or third sound pattern; and
i) if the message is determined by the step (g) to be answered within said prescribed period of time, displaying the answered message.

## Revendications

1. Installation d'appel radio comportant :
un récepteur (1) pour détecter un signal d'appel adressé à l'installation d'appel,
une batterie (13),
un commutateur de courant actionné manuellement (14) destiné à être actionné par un utilisateur pour activer ladite installation d'appel, à l'aide de ladite batterie (13) lorsque l'installation d'appel est en utilisation et désactiver ladite installation d'appel lorsque l'installation d'appel n'est pas en utilisation,
une mémoire (5) constamment mise sous tension par la batterie (13) même si réinstallation d'appel est désactivée,
une commande (3) pour mémoriser dans ladite mémoire (5) un message transmis par ledit signal d'appel, classifier le message mémorisé à l'aide d'une première étiquette indiquant que le message mémorisé est un message de pré-avertissement, et changer l'étiquette du message mémorisé en une deuxième étiquette indiquant que le message mémorisé est un message n'ayant pas eu de réponse si le message mémorisé n'a pas de réponse dans une période de temps prescrite, et changer l'étiquette du message mémorisé en une troisième étiquette indiquant que le message mémorisé est un message ayant eu une réponse si le message mémorisé a eu une réponse dans ladite période de temps prescrite, ladite commande (3) répondant audit commutateur de courant (14) actionné de nouveau par l'utilisateur pour réactiver ladite installation d'appel pour chercher immédiatement à travers ladite mémoire (5) à détecter les messages situés dans celle-ci,
des moyens (8) pour produire des première, deuxième et troisième configurations sonores,
des moyens (9) pour avertir un utilisateur à l'aide de la première configuration sonore si la commande (3) détecte un message ayant ladite première étiquette, et avertir l'utilisateur à l'aide de la deuxième ou de la troisième configuration sonore si la commande (3) détecte un message ayant ladite deuxième ou ladite première étiquette, respectivement, lorsque lesdits messages sont détectés pendant la recherche immédiate après réactivation de l'installation d'appel, et
des moyens (10) pour afficher un message ayant ladite troisième étiquette.

2. Procédé pour actionner une installation d'appel radio comportant un récepteur (1) destiné à détecter un signal d'appel adressé à l'installation d'appel, une batterie (13), un commutateur de courant actionné manuellement (14) pour activer ladite installation d'appel à l'aide de ladite batterie lorsque l'installation d'appel est en utilisation et désactiver ladite installation d'appel lorsque l'installation d'appel n'est pas en utilisation, et une mémoire (5) alimentée constamment par la batterie même si l'installation d'appel est désactivée, le procédé comportant les étapes constituant à :
a) mémoriser dans ladite mémoire (5) un message transmis par ledit signal d'appel,
b) classifier le message mémorisé à l'aide d'une première étiquette indiquant que le message mémorisé est un message de pré-alerte,
c) alerter un utilisateur à l'aide d'une première configuration sonore et déterminer si le message mémorisé a eu une réponse dans une période de temps prescrite,
d) si le message mémorisé est déterminé par l'étape (c) comme n'ayant pas eu de réponse dans ladite période de temps prescrite, changer l'étiquette du message mémorisé en une seconde étiquette indiquant que le message mémorisé est un message n'ayant pas eu de réponse,
e) si le message mémorisé est déterminé par l'étape (c) comme ayant eu une réponse dans ladite période de temps prescrite, afficher le message ayant eu une réponse et changer son étiquette en une troisième étiquette,
f) détecter lorsque ladite installation d'appel est activée à nouveau et, après ceci, chercher immédiatement à travers ladite mémoire à détecter un message situé dans celle-ci,
g) avertir immédiatement l'utilisateur à l'aide d'une seconde ou troisième configuration sonore si le message détecté par l'étape (f) est appliqué par la seconde ou première étiquette, respectivement, et déterminer si le message détecté par l'étape (f) a eu une réponse dans une période de temps prescrite,
h) si le message est déterminé par l'étape (g) comme n'ayant pas eu de réponse dans ladite période de temps prescrite, arrêter ladite seconde ou troisième configuration sonore, et
i) si le message est déterminé par l'étape (g) comme ayant eu une réponse dans ladite période de temps prescrite, afficher le message répondu.

## Patentansprüche

1. Personenruf-Funkempfänger mit:
einem Empfänger (1) zur Ermittlung eines an den Personenrufempfänger adressierten Personenrufsignals;
einer Batterie (13);
einem handbetätigten Netzschalter (14), der von einem Anwender zu betätigen ist, zum Aktivieren des Personenrufempfängers mit der Batterie (13), wenn der Personenrufempfänger in Benutzung ist, und zum Deaktivieren des Personenrufempfängers, wenn der Personenrufempfänger nicht in Benutzung ist;
einem Speicher (5), der von der Batterie (13) auch dann mit Leistung versorgt wird, wenn der Personenrufempfänger deaktiviert ist;
einem Controller (3) zum Speichern einer von dem Personenrufsignal übertragenen Nachricht in dem Speicher (5), zum Klassifizieren der gespeicherten Nachricht mit einem ersten Kennzeichen, das anzeigt, daß die gespeicherte Nachricht eine Voralarm-Nachricht ist, und zum Ändern des Kennzeichens der gespeicherten Nachricht in ein zweites Kennzeichen, das anzeigt, daß die gespeicherte Nachricht eine unbeantwortete Nachricht ist, wenn die gespeicherte Nachricht innerhalb eines vorbestimmten Zeitabschnitts nicht beantwortet wird, und zum Ändern des Kennzeichens der gespeicherten Nachricht in ein drittes Kennzeichen, das anzeigt, daß die gespeicherte Nachricht eine beantwortete Nachricht ist, wenn die gespeicherte Nachricht innerhalb des vorgeschriebenen Zeitabschnitts beantwortet wird, wobei der Controller (3) darauf anspricht, daß der Netzschalter (14) wieder vom Anwender betätigt wird, um den Personenrufempfänger erneut zu aktivieren, und zwar zum sofortigen Durchsuchen des Speichers (5), um Nachrichten in diesem zu ermitteln;
einer Einrichtung (8) zur Erzeugung eines ersten, eines zweiten und eines dritten Tonmusters;
einer Einrichtung (9) zum Ansprechen eines Anwenders mit dem ersten Tonmuster, wenn der Controller (3) eine Nachricht mit dem ersten Kennzeichen ermittelt, und zum Ansprechen des Anwenders mit dem zweiten oder dritten Tonmuster, wenn der Controller (3) eine Nachricht mit dem zweiten bzw. ersten Kennzeichen ermittelt, wenn Nachrichten während des unmittelbaren Durchsuchens nach erneuter Aktivierung des Personenrufempfängers ermittelt werden; und
einer Einrichtung (10) zum Anzeigen einer Nachricht mit dem dritten Kennzeichen.

2. Verfahren zum Betreiben eines Personenrufempfängers mit einem Empfänger (1) zum Ermitteln eines an den Personenrufempfänger adressierten Personenrufsignals, einer Batterie (13), einem manuell betätigten Netzschalter (14) zum Aktivieren des Personenrufempfängers mit der Batterie, wenn der Personenrufempfänger in Benutzung ist, und zum Deaktivieren des Personenrufempfängers, wenn der Personenrufempfänger nicht in Benutzung ist, und einem Speicher (5), der von der Batterie auch dann ständig mit Leistung versorgt wird, wenn der Personenrufempfänger deaktiviert ist; wobei das Verfahren die Schritte aufweist:
a) Speichern einer von dem Personenrufsignal übertragenen Nachricht in dem Speicher (5);
b) Klassifizieren der gespeicherten Nachricht durch ein Kennzeichen, das anzeigt, daß die gespeicherte Nachricht eine Voralarm-Nachricht ist;
c) Ansprechen eines Anwenders mit einem ersten Tonmuster und Bestimmen, ob die gespeicherte Nachricht innerhalb eines vorgeschriebenen Zeitabschnitts beantwortet worden ist;
d) wenn im Schritt (c) bestimmt wird, daß die gespeicherte Nachricht innerhalb des vorgeschriebenen Zeitabschnitts nicht beantwortet worden ist, Ändern des Kennzeichens der gespeicherten Nachricht in ein zweites Kennzeichen, das anzeigt, daß die gespeicherte Nachricht eine unbeantwortete Nachricht ist;
e) wenn im Schritt (c) bestimmt wird, daß die gespeicherte Nachricht innerhalb des vorgeschriebenen Zeitabschnitts beantwortet worden ist, Anzeigen der beantworteten Nachricht und Ändern ihres Kennzeichens in ein drittes Kennzeichen;
f) Ermitteln, wenn der Personenrufempfänger wieder aktiviert wird, und unmittelbar anschließendes Durchsuchen des Speichers, um eine Nachricht in diesem zu ermitteln;
g) Unmittelbares Ansprechen des Anwenders mit einem zweiten oder dritten Tonmuster, wenn die im Schritt (f) ermittelte Nachricht durch ein zweites bzw. erstes Kennzeichen bezeichnet wird, und Bestimmen, ob die im Schritt (f) ermittelte Nachricht innerhalb eines vorbestimmten Zeitabschnitts beantwortet worden ist;
h) wenn im Schritt (g) bestimmt wird, daß die Nachricht innerhalb des vorgeschriebenen Zeitabschnitts nicht beantwortet worden ist, Beenden des zweiten oder dritten Tonmusters; und
i) wenn im Schritt (g) bestimmt wird, daß die Nachricht innerhalb des vorbestimmten Zeitabschnitts beantwortet worden ist, Anzeigen der beantworteten Nachricht.
